# EUROPEAN PATENT APPLICATION

(11) **EP 1 067 406 A1**
(43) Date of publication of application: **10.01.2001**
(21) Application number: 99112602.0
(22) Date of filing: 01.07.1999
(51) Int. Cl.: G02B 1/04

(54) **Thermosetting plastics as substrate materials for optical systems**

(71) Applicant: Fraunhofer-Gesellschaft zur Förderung der angewandten Forschung e.V., 80636 München (DE)
(72) Inventor: Bauer, Monika, Prof.Dr., 15754 Senzig (DE); Bauer, Jörg, Dr., 15754 Senzig (DE); Dreyer, Christian, 14513 Teltow (DE); Keil, Norbert, 14089 Berlin (DE); Zawadzki, Crispin, 12309 Berlin (DE)
(74) Representative: Olgemöller, Luitgard, Dr.

(57) **Abstract**

The present invention relates to the use of a thermosetting plastic as a substrate material in optical systems. The optical system may be e.g. a waveguide system or an electro-optical actuator or a thermo-optical actuator.

## Description

The present invention is directed to optical instruments and systems which comprise organic polymers as optical elements, applied to suitable substrates. Specifically, the substrates consist of or comprise thermosetting plastics.

Organic polymers are increasingly interesting materials in the optical or microoptical field, in integrated optics or in microsystem techniques. In these fields, they may be used in optical instruments and apparatuses or parts thereof as well as in special optics as lenses, prisms, for fixation of optical systems, as support material for optical layers and as translucent coating materials for mirrors or lenses. Organic polymers may be used in optical fibres and for the preparation of waveguide structures. Their technical handling is relatively easy, and their density is lower in comparison to glass.

Specifically, if different optical elements are to be integrated on a chip, e.g. of electro-optical or thermo-optical actuators or arrayed waveguide gratings (AWGs), respectively, a variety of requirements of the overall system polymer/substrate have to be met. Most important are the optical properties, for example refractive index and optical losses of the materials, but also technological requirements like preparation of layers and structurability as well as the thermal and thermo-mechanical stability and the long-term retention of all important parameters. For a variety of optical elements, specific requirements have to be met in addition, for example low birefringence (especially in AWGs) or variability of the refractive index by means of a circuit using applied electrodes (electro-optical and thermo-optical actuators). Especially if switching is performed thermo-optically, the thermoconductivity of the overall system polymer/substrate plays an important role for the quality of the optical element. If multiple optical elements are combined on a substrate, all requirements have to be fulfilled for each element and each of the combinations of elements/substrates. This is very difficult.

Until now, polymethacrylates and polycarbonates have been mainly used for optical purposes. Both classes of polymers have an excellent light transmittance, but their thermal and thermo-mechanical stability is not sufficient due to their chemical structure. Thus, polymethacrylates and polycarbonates cannot practically be used at temperatures exceeding 130°C which is due to their relatively low glass transition temperatures. In addition, both types of polymers are linear, un-crosslinked polymers. This has the adverse effect that they are partly solubilized in case multilayer-systems are prepared via the application of dissolved components, e.g. by spin-coating each layer. Consequently, the layer structures as obtained are not sufficiently delimitated and neat which, however, is an essential for the preparation of waveguide structures.

Increasingly used are other high performance polymers which have glass transition temperatures of more than 180°C. Examples are polyarylethersulfones, polyarylsulfones, polyaryletherketones, polyimides and polyetherimides, the processing of which, however, is more difficult than that of polymethacrylates and polycarbonates. However, they suffer from the disadvantage of relatively high optical attenuation at 1.3 µm and 1.55 µm, wavelengths which are important in communication engineering technologies.

Polyperfluorocyclobutanes (PFCB) are a relatively new class of high performance polymers. Upon thermal curing they yield unsoluble cross-linked polymers which are characterized by high thermal stability. Waveguide layers prepared from PFCB show very low optical losses of 0.2 dB/cm at 1550 nm.

Also, polycyanurates have been used for the preparation of optical components. US patents 5 208 892 and 5 165 959 describe the preparation of polycyanate resins made of a single monomer (either fluorinated or non-fluorinated). German Offenlegungsschrift DE 44 35 992 A1 describes optical elements prepared from polycyanurate resins. Like polyperfluorocyclobutanes, polycyanurates yield unsoluble cross-linked polymers upon thermal curing, and these polymers are as well characterized by high thermal stability. They are specifically useful due to their excellent adhesional force on a variety of substrates, for example silicon, silica or a variety of organic polymers. Refractive index and glass transition temperature of the cured cross-linked polymers may be varied in broad ranges, due to the easy availability of a great number of di- and mono-functional cyanate monomers which may be copolymerized with each other. Completely cured polycyanurates known in the art which consequently are stable for long terms may have optical losses of about 0.2 dB/cm at 1.3µm, but not less than 0.5dB/cm at 1.55µm.

Specifically in case cross-linked polymers having high glass transition temperatures are used for the preparation of the optical systems to be prepared, a variety of preparation steps have to be performed at high temperatures. For example, curing of polycyanurate layers is performed at 200° to 250°C, and that of PFCB layers at 240° to 300°C. On the other hand, use of the optical systems thus prepared is in general from environmental temperature to about 80°C. If the coefficients of thermal expansion of the substrate and of the polymer layers differ from each other, for example if silicon wafers are used for the substrate, a thermal stress is developed in the layers during the repeated heating and cooling operations which result in an enormous optical birefringence or, in the worst case, in a rupture or scaling of the optical layer(s) from the substrate.

In US patent 5,170,461 to Yoon et al., the preparation of thermoplastic polymer substrates for use in organopolymer electro-optical wave guides is described. The polymer substrate is fabricated using sufficiently stress-free thermoplastic transformation, e.g. injection moulding or compression moulding. As the materials, commercially available thermoplastics like polycarbonates, polyacrylates, polysulfones, polyimides and the like are used. Onto these substrates, polymer layers are applied according to known techniques, yielding wave guide structures. The polymeres used for the optical systems show coefficients of thermal expansion which are similar to those of the substrates used by which optical systems having low stresses frozen therein and consequently having a low birefringence are obtained.

If cross-linked polymers having a high glass transition temperature are used for the preparation of the optical elements, thermoplastic substrates cannot be used in most cases. First, the substrate softens and is deformed when the layers are cured at the required high temperatures of about 200 to 300°C because thermoplastic materials in general show a too low thermostability. Second, the coefficients of thermal expansion of thermoplastic materials are usually in a range of 100 ppm higher than those of cross-linked polymers (in general about 60 ppm), resulting in the inclusion of stresses and consequently in an undesired optical birefringence at the working temperature of the optical element or system. In this regard, substrates made of thermoplastics are comparable to substrates made of silicon. Third, unmodified, e.g. thermoplastic polymer substrates for e.g. thermo-optical actuators suffer from a very low thermal conductivity which results in unfavourable temperature profiles and consequently in a bad rupturing performance. If different optical elements are to be placed on the same chip, e.g. AWGs and thermo-optical actuators, it is therefore not possible to realise an optimum layer construction for all elements.

It is the problem of the present invention to overcome the disadvantages of the substrate layers used in the past and to provide thermal and thermo-mechanical long-term substrates for optical elements or systems, which have coefficients of thermal expansion adaptable to those of the optical elements.

Preferably, the substrates are easy to prepare and can be polished, and the application and processability of polymer layers onto the substrates in order to provide optical elements or systems, e.g. wave guide structures, shall be possible according to common methods.

The problem of the invention has been solved in that substrates are provided which contain or consist of thermosetting plastics and have duromeric properties. Such thermosetting plastics have the above mentioned desired properties. The substrates are prepared by curing the respective reactive resins in a casting mould.

In an preferred embodiment, the invention provides a substrate having different thermal conductivity in different parts of the substrate.

In cured condition, the thermosetting plastics used according to the invention are duromers and show glass transition temperatures which exceed the temperatures required for application of the optical layers to be applied thereon during preparation of the optical systems. Preferably, they are in a range of 150 - 350°C, more preferable not less than 200°C.

The thermosetting plastics are preferably prepared from resins ("reactive resins") selected from the group comprising epoxides (e.g. Araldit LY 556 from Ciba Speciality Chemicals Inc), polycyanurates or polycyanates (e.g. AroCy B-10 from Lonza AG), bismaleimides (e.g. Compimide 796 from Technochemie), bismaleimide triazine resins (e.g. BT2400 from Mitsubishi Gas Chemical Comp., Inc.) and the like or mixtures of such resins which partly are commercially available and partly known from the literature.

As mentioned above, the substrates of the optical systems according to the present invention can be prepared by casting. Injection moulding or compression moulding should be avoided. Casting moulds may be open or sealed.

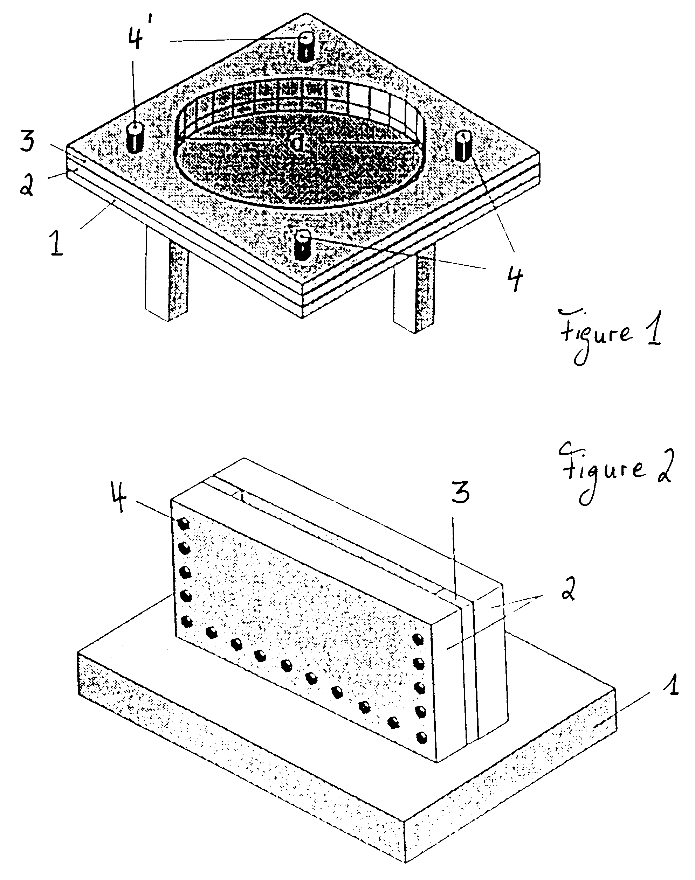

**Figure 1** shows an open casting mould for the preparation of substrates according to the present invention. The reference numbers are as follows: On an adjustable ground-plate 1, a PTFE-plate 2 and a steel-plate 3 are locked together with lockings 4 and 4'. The diameter d of the mould may be e.g. 3" (7,62 cm). The thickness of the mould may be about 1 mm.

**Figure 2** shows a sealed mould for the preparation of substrates according to the present invention. On a ground-plate 1, two aluminum-plates 2 are mounted which are spaced by an PTFE-distance holder 3. The aluminum-plates and the distance holder are connected by locking screws 4. The inside dimension may be e.g. 10 cm x 20 cm x 2 mm.

For the preparation of the substrate of the invention, the uncured resin (if necessary after liquefidication by applying sufficient heat) is casted into a suitable mould. If necessary or favorable, a vacuum or a reduced pressure is applied, e.g. using a vacuum drying oven. Subsequently, the resin is cured using a suitable temperature or temperature profile. Not more but very little mechanical stress in the moulded articles is obtained by low cooling of the moulds until environmental temperature is reached. After demoulding, the obtained substrates may be mechanically treated or machined, e.g. cut, sawed, milled or sinked. In accordance to the requirements of the surface to be met in order to ensure correct application of the optical layers, the surface may be polished using common methods which are e.g. known from the technology of silicon wafers.

The coefficient of thermoexpansion of the substrate may be adapted to that of the optical element(s) or layer(s) applied thereon in different ways. First, it is possible to mix more than one of the "reactive" resins (i.e. those which upon curing would yield duromers) having different coefficients of thermal expansion. By this way, a thermosetting plastic having the desired value thereof may be obtained. Further, the resins of the present invention yielding thermosetting plastics may be mixed with thermoplastic materials. The thermoplastic materials are preferably selected from polyimides (e.g. Matrimid 5218 from Ciba Speciality Chemicals Inc.), polyetherimides (e.g. Ultem® 1000 from General Electric), polyethersulfones (e.g.Victrex® 5003P from ICI), polysulfones (e.g. Udel® 1800P from Amoco), polyarylates (e.g. Ardel® D100 from Amoco), polycarbonates (e.g. Merlon® from General Electric), polyesters (e.g. Vitel 3200 from Bostik). Alternatively or in addition, the thermosetting plastics may be mixed with elastomeres, e.g. Hycar® HTBN or Hycar® ATBN from BF Goodrich, polytetrahydrofuran (e.g. CD 2000 from BASF), or polyurethane (e.g. Desmodur E23 from Bayer AG). Both kinds of additives result in an increase of the coefficient of thermal expansion. If mixtures are used which do not show a macroscopic phase separation, the ratio of thermosetting plastics and thermoplastic material/elastomeric material may be selected as desired, thereby allowing to adjust the coefficient of thermal expansion as needed in the whole range between that of the thermosetting plastic and that of the thermoplastic/elastomeric material. Of course, the ratio of thermoplastic material has to be chosen in such a way that the duromeric properties of the substrate is maintained. Preferably, the thermosetting plastic is present in the mixture in an amount of at least about 30% by weight, more preferably of at least about 50% per weight.

On the other hand, if the coefficient of thermal expansion shall be lowered, this may be obtained by mixing the thermosetting plastic(s) with materials like glass, ceramics, metal, graphite, carbon black and/or others which may be incorporated as powders, woven or non-woven textiles, e.g. fleeces or webs. If sufficient thermosetting plastic is used as a binder between these additional elements, the strength of the substrate is satisfactory. In order to obtain such a strength, preferably at least 5 wt.-% and more preferably more than 50 - 99 wt.-% of the thermosetting plastic is used in this mixture. Due to the broad range of mixing ratio, the coefficient of thermal expansion may be adjusted as required in the whole range between that of that of the thermosetting plastic and that of the filling material.

To increase the thermal conductivity of the substrate, the thermosetting plastic can be mixed with materials like metal, carbon black, graphite and others. Again, such substances may be used as powders, woven or non-woven textiles and the like.

In order to maintain a sufficient strength of the substrate, preferably more than 20-50 wt.-% of the thermosetting plastic is used in this mixture.

In addition to the thermal conductivity varying substance(s), thermoplastic or elastomeric material can be incorporated into the mixture. Thus, the coefficient of thermal expansion may be adjusted together with that of the thermal conductivity, as desired.

In a specific embodiment, a substrate is provided having different coefficients of thermal expansion in different areas of the substrate. Such substrates may be obtained by a partial modification of the materials used for the substrate as described above, but only in specific areas of the substrate. Preferably, the resin is cured in an open mould (see figure 1). Materials like those exemplified above for the respective modification are applied into the desired specific areas of this mould as required. These materials may have the form of powders, woven or non-woven textiles and the like. If thermoplastic or elastomeric materials as described above shall be introduced, this may be done using high viscous molten charges. Alternatively or in addition, molten charges of thermoplastic or elastomeric materials may be used into which a suitable powder has been suspended. This embodiment may be used if fixation of the powder (e.g. one of those mentioned above) at specified areas is desired. After introduction of the materials as described above, the mould is filled with resin which upon curing yields a thermosetting material. After curing of the substances present in the mould, a substrate having areas of different coefficient of thermal expansion and/or of thermal conductivity is obtained.

The invention is now further illustrated by way of examples:

### Example 1

6g AroCy® B-10 (Lonza AG) are heated to 90°C in a round bottomed flask and the melted material is degassed at 2-3 kPa for 30 min. The melt is poured into a casting mould as shown in figure 1, having an inner diameter d of 3" (7,62 cm) and a thickness of about 1 mm. Subsequently, the mould is brought into a drying oven in order to cure the resin. The temperature profile applied is: 20 h at 180°C, 30 min to reach 200°C, 1h at 200°C, 30 min to reach 220°C, 1 h at 220°C, 30 min to reach 240°C, 1 h at 240°C, 30 min to reach 260°C, 1 h at 260°C, 30 min to reach 280°C, 1 h at 280°C, cooling to room temperature with a rate of 0.5 K/min. After releasing the substrate from the mould, the rim is trimmed using abrasive paper, and a firm, stable disc or plate is obtained, having 3" diameter and a thickness of 1 mm. Optional, the already very smooth surface of the disc may be polished using fine-grained abrasive. The substrate thus obtained may be used in the preparation of optical systems (e.g. comprising optical multi-layers), for example using processing steps like spin-coating, thermal curing, RIE etching and the like, as it is known for the processing of silicon wafers.

### Example 2

5g AroCy® B-10 (Lonza AG) are heated to 90°C in a round bottomed flask and the melted material is degassed at 2-3 kPa for 30 min. The melt is poured into a casting mould as shown in figure 1, having an inner diameter d=3" (7,62 cm) and a thickness of about 1 mm. 1 g of a mixture of 60 wt-% copper powder and 40 wt-% AroCy® L-10 (Lonza AG) are poured to that area in the casting mould in which a different thermal conductivity shall be obtained, compared to the remaining areas of the substrate. Subsequently, the polymer is cured in a drying oven. The temperature profile applied is: 20 h at 180°C, 30 min to reach 200°C, lh at 200°C, 30 min to reach 220°C, 1 h at 220°C, 30 min to reach 240°C, 1 h at 240°C, 30 min to reach 260°C, 1 h at 260°C, 30 min to reach 280°C, 1 h at 280°C, cooling to room temperature with a rate of 0.5 K/min. After releasing the substrate from the mould, the rim is trimmed using abrasive paper, and a firm, stable disc or plate is obtained, having 3" diameter and a thickness of 1 mm. A delimitated area can be seen on the disk which contains the copper powder. Optional, the already very smooth surface of the disc may be polished using fine-grained abrasive. The substrate thus obtained may be used in the preparation of optical systems (e.g. comprising optical multi-layers), for example using processing steps like spin-coating, thermocuring, RIE-etching and the like, as it is known for the processing of silicon wafers.

### Example 3

53 g of a mixture of 41.5 wt.-% bisphenol A diglycid ether, 37.5 wt-% tetrahydrophthalic anhydride, 1 wt-% dimethylbenzylamine and 20 wt.-% Hycar® HTBN (BF Goodrich) are heated to temperature of 70°C in a round bottomed flask, and the melt is degassed at 2-3 kPa for 30 min. The melt is cast into a sealable casting mould (Figure 2) having inner dimensions of 22x12x0.15 cm and is cured in a drying oven; temperature profile: 5 h at 80°C, 30 min to reach 120°C, 1 h at 120°C, 30 min to reach 140°C, 1 h at 140°C, 30 min to reach 160°C, 1 h at 160°C, and cooling to environment temperature at a rate of 0.5 K/min. After releasing from the mould, a stable plate is obtained. Two discs having a diameter of 4" (10.16 cm) are cut from the plate, using a lead saw. Both surfaces of the disc are polished several times using an abrasive of consecutively finer grains. The substrate thus obtained may be used in the preparation of optical systems (e.g. comprising optical multilayers), for example using processing steps like spin-coating, thermocuring, RIE-etching and the like, as it is known for the processing of silicon wafers.

## Claims

1. Use of a thermosetting plastic as a substrate material in optical systems.

2. Use according to claim 1 wherein the optical system is a waveguide system or an electro-optical actuator or a thermo-optical actuator.

3. Use according to claim 1 or 2, wherein the thermosetting plastic has a glass transition temperature of not less than 150°C, preferably of not less than 200°C, more preferably of not less 250°C and most preferably not less than 300°C.

4. Use according to any of claims 1 to 3, wherein the thermosetting plastic is selected from at least one of the group consisting of epoxyd resins, polycyanurate resins, polycyanate resins, bismaleimide resins and bismaleimide triazine resins or mixtures thereof.

5. Use according to any of claims 1 to 4, wherein the substrate material consists of the said thermosetting plastic and at least one of a thermoplastic material and an elastomeric material.

6. Use according to claim 5, wherein the thermoplastic material is selected from polyimides, polyetherimides, polyethersulfones, polysulfones, polyarylates, polycarbonates, polyesters and mixtures of these polymers and/or wherein the elastomeric material is selected from acrylonitrile-butadiene, acrylonitrile-butadiene-styrene, polyesters and polyurethanes.

7. Process for the preparation of a substrate for optical systems, wherein a liquid which upon curing forms a thermosetting plastic, is casted into a casting mould, the casting mould is optionally sealed, the resin is optionally degassed by applying a vacuum, and the resin is cured by applying a suitable temperature or temperature profile.

8. Process according to claim 7 wherein a thermoplastic and/or elastomeric material is added to the resin which upon curing will form a thermosetting plastic.

9. Process according to claim 7 or 8 wherein a material which lowers the coefficient of thermal expansion of the thermosetting plastic is added to the resin which upon curing will form a thermosetting plastic, the said material preferably selected from glass, ceramics, metal, graphite, carbon black.

10. Process according to any of claims 8 or 9 wherein the thermoplastic material and/or the elastomeric material and/or the material which lowers the coefficient of thermal expansion of the thermosetting plastic is added by placing it only into predetermined restricted areas of the mold.

11. Optical system comprising a substrate material and at least one optical element applied thereto, wherein the substrate material is a thermosetting plastic.

12. Optical system according to claim 11 which is a waveguide system or an electro-optical actuator or a thermo-optical actuator.

13. Optical system according to claims 11 or 12 wherein the thermosetting plastic has a glass transition temperature of not less than 150°C, preferably of not less than 200°C, more preferably of not less 250°C and most preferably not less than 300°C and/or is selected from at least one of the group consisting of epoxyd resins, polycyanurate resins, polycyanate resins, bismaleimide resins and bismaleimide triazine resins or mixtures thereof.

14. Optical system according to any of claims 11 to 13, wherein the substrate material consists of the said thermosetting plastic and at least one thermoplastic material, preferably selected from polyimides, polyetherimides, polyethersulfones, polysulfones, polyarylates, polycarbonates, polyesters and mixtures of these polymers, and at least one elastomeric material, preferably selected from acrylonitrile-butadiene, acrylonitrile-butadiene-styrene, polyesters and polyurethanes.
